(19) Europäisches Patentamt
European Patent Office
Office européen des brevets

(11) Veröffentlichungsnummer: 0 292 648 B1

# (12) EUROPÄISCHE PATENTSCHRIFT

(45) Veröffentlichungstag der Patentschrift: 19.08.92

(51) Int. Cl.5: **B60T 8/48**, B60T 8/42

(21) Anmeldenummer: 88102866.6

(22) Anmeldetag: 26.02.88

(54) **Bremsanlage mit Blockierschutz- und/oder Antriebsschlupfregelung sowie Bremsdruckmodulator für eine solche Bremsanlage.**

(30) Priorität: 22.05.87 DE 3717236
22.05.87 DE 3717237
22.05.87 DE 3717238

(43) Veröffentlichungstag der Anmeldung:
30.11.88 Patentblatt 88/48

(45) Bekanntmachung des Hinweises auf die Patenterteilung:
19.08.92 Patentblatt 92/34

(84) Benannte Vertragsstaaten:
DE FR GB IT SE

(56) Entgegenhaltungen:
DE-A- 2 208 936
DE-A- 2 942 517
DE-A- 3 322 422
FR-A- 2 586 390

(73) Patentinhaber: ALFRED TEVES GmbH
Guerickestrasse 7 Postfach 90 01 20
W-6000 Frankfurt am Main 90(DE)

(72) Erfinder: **Kircher, Dieter**
**Wolfgangstrasse 26**
**W-6000 Frankfurt/Main(DE)**
Erfinder: **von Grünberg, Hubertus, Dr.**
**Fischbacher Strasse 26**
**W-6380 Bad Homburg(DE)**
Erfinder: **Blum, Klaus-Dieter**
**Am Hohenstein 7d**
**W-6233 Kelkheim(DE)**

(74) Vertreter: **Blum, Klaus-Dieter, Dipl.-Ing.**
**c/o ALFRED TEVES GMBH Guerickestrasse 7**
**W-6000 Frankfurt/Main 90(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Bremsanlage mit Blockierschutz- und/oder Antriebsschlupfregelung, bestehend im wesentlichen aus einem pedalbetätigten hydraulischen Bremsdruckgeber, aus einem zwischen dem Bremsdruckgeber und den Radbremsen in die Druckmittelwege eingefügten Bremsdruckmodulator in Form eines zentralen Plungersystems das mindestens einen axial verschiebbaren Plungerkolben aufweist und mit dem durch Volumenänderung mindestens eines das Hydraulikmedium enthaltenden Raumes der Bremsdruck variierbar ist und an das die Radbremsen über in der Ruhestellung offene, auf Sperren umschaltbare Radventile angeschlossen sind, sowie aus Sensoren zur Ermittlung des Raddrehverhaltens und elektronischen Schaltkreisen zur Verarbeitung der Sensorsignale und zur Erzeugung von Bremsdruck-Steuersignalen.

Nach dem Plungerprinzip arbeitende Bremsanlagen dieser Art sind bereits in vielfältiger Ausgestaltung bekannt. Sobald das Raddrehverhalten eine Blockiertendenz erkennen läßt, wird bei derartigen Anlagen der Druckmittelweg von dem Bremsdruckgeber zu der betroffenen Radbremse gesperrt und unter dem Einsatz einer Hilfskraft das Volumen eines mit der Radbremse verbundenen, das eingeschlossene Hydraulikmedium enthaltenden Raumes erweitert. Üblicherweise wird hierzu ein Kolben oder Tauchkolben verwendet, dessen Stirnfläche eine hydraulisch an die Radbremse angeschlossene Kammer begrenzt und der durch die Bremsdruck-Steuersignale unter Zuhilfenahme der Fremdkraft oder Hilfskraft verschiebbar ist. Zur Wiedererhöhung des Bremsdruckes während eines Regelvorganges wird der Kolben in seine ursprüngliche Lage zurückgestellt.

Eine derartige Bremsanlage ist beispielsweise in der DE 34 37 994 A1 beschrieben. Der Bremsdruckgeber dieser Anlage besitzt einen Kauptbremszylinder, an den die Radbremse des geregelten Rades hydraulisch angeschlossen ist. In den Druckmittelweg ist zur Druckmodulation ein Stellglied mit einem Plungerkolben und einem Kugelsitzventil, das in der Ruhelage des Stellgliedes durch einen an der Stirnfläche des Kolbens befestigten Stößel offengehalten wird, eingefügt. Eine kräftige Feder hält den Kolben in seiner Grundstellung, in der das Stellglied einen Bremsvorgang nicht beeinflußt. Zur Verschiebung des Kolbens gegen die Kraft dieser Feder, wodurch im Regelfall die gewünschte Druckabsenkung erreicht wird, ist der Kolben über eine Schraubenspindel und eine Wirbelstromkupplung mit einem Elektromotor verbunden. Diese Kupplung besteht im wesentlichen aus einem durch den Elektromotor angetriebenen Polrad, einer feststehenden Induktionsspule und einem mit der Schraubenspindel und über diese Spindel mit dem Plungerkolben verbundenen Rotor. Das auf den Rotor ausgeübte, zum Zurückziehen des Plungerkolbens und damit zu der Volumenerweiterung und zu dem Bremsdruckabbau führende Drehmoment ist abhängig von der Höhe des Erregerstroms in der Induktionsspule, der, wenn sich das Polrad dreht, ein rotierendes Drehfeld erzeugt. Die Zurückstellung des Kolbens übernimmt die Rückstellfeder. Durch Variation des Erregerstroms, der durch die Induktionsspule fließt, läßt sich der Bremsdruckverlauf steuern.

Sobald der Plungerkolben als Folge des erzeugten Drehmomentes gegen die Kraft der Rückstellfeder verschoben wird, schließt das Kugelsitzventil und unterbricht dadurch den von dem Bremsdruckgeber zu dem Druckmodulator und zur Radbremse führenden Druckmittelweg.

Ferner ist bereits eine blockiergeschützte hydraulische Bremsanlage bekannt, bei der in jedem Bremskreis ein Plungersystem mit einem von dem Bremsdruck beaufschlagten gestuften Kolben, der bei nicht geregelten Bremsungen durch eine Rückstellfeder in seiner Ausgangsstellung gehalten wird, eingefügt ist (DE 36 02 430 A1). Die Hilfsenergie zum Verschieben des Plungerkolbens, wobei die Kraft der Rückstellfeder überwunden werden muß, wird durch eine Hydraulikpumpe zur Verfügung gestellt, die für jedes Plungersystem einen eigenen Druckmittelweg besitzt. Derartige Bremsanlagen haben den Nachteil, daß zwei oder mehrere, zudem relativ aufwendige Plungersysteme erforderlich sind.

Eine andere bekannte Bremsanlage, die einen Hauptzylinder mit einem vorgeschalteten, die Pedalkraft unterstützenden Unterdruckverstärker oder hydraulischen Verstärker besitzt, ist derart ausgebildet, daß im Regelfall die auf den Hauptzylinder gerichtete, hilfskraftunterstützte Pedalkraft zeitweise durch eine entgegengerichtete Fremdkraft teilweise oder vollständig kompensiert wird (DE 33 17 629 A1). An den Hauptzylinder sind die geregelten Räder über normalerweise auf Durchlaß geschaltete, auf Sperren umschaltbare Mehrwegeventile angeschlossen. Nach dem sogen. Multiplex-Verfahren werden die einzelnen Räder mit Hilfe dieser Mehrwegeventile nacheinander mit dem Hauptzylinder verbunden. Durch entsprechende Einstellung und Variation der entgegengerichteten Fremdkraft kann nun der Bremsdruck in dem momentan hydraulisch an den Hauptzylinder angeschlossenen Rad auf das gewünschte Druckniveau abgesenkt oder erhöht werden. Die Erzeugung und schnelle Variation der Fremdkraft, die der Pedalkraft entgegengerichtet ist, führt zu einem relativ aufwendigen Bremsdruckgeber.

Aus der DE 29 42 517 A1 ist auch schon eine Bremsblockierschutzeinrichtung bekannt, die einen Hauptzylinder mit einem hydraulischen Verstärker und ein Plungersystem umfaßt, dessen Plungerkolben durch Einsteuerung von hydraulischem Hilfsdruck gegen die Kraft einer Rückstellfeder verschiebbar sind. Der Hilfsdruck wird mit einem hydraulischen Energieversorgungssystem, das eine Hydraulikpumpe und einen Druckspeicher besitzt, zur Verfügung gestellt. Die Radbremsen eines Kreises sind an das Plungersystem über je ein elektrisch gesteuertes 2/2-Wegeventil, das in der Ruhestellung auf Durchlaß geschaltet ist, angeschlossen. Bei Hilfsdruckeinsteuerung in das Plungersystem wird ein Rückschlagventil, das in dem Druckmittelweg von dem Hauptzylinder zu dem Plunger eingefügt ist, geschlossen. Die Bewegung der Plungerkolben wird mit Hilfe des elektrisch umschaltbaren 3/2-Wegeventils bzw. mit Hilfe des durch dieses Ventil in den Plunger eingesteuerten Hilfsdruckes verschoben. Der erforderliche Aufwand an hydraulischen Komponenten, insbesondere zur Erzeugung und Steuerung des hydraulischen Hilfsdrucks, ist also beträchtlich.

Aus der DE 33 22 422 A1 ist eine Bremsanlage mit einer Blockierschutzeinrichtung bekannt, die ebenfalls ein Plungersystem mit elektrischem Antriebsmotor und ein Trennventil aufweist, das den direkten Druckmittelweg vom Hauptzylinder zur Radbremse unterbricht. Für jeden unabhängigen Regelkreis ist ein derartiges Plungersystem mit individuellem Antriebsmotor erforderlich, da der Radbremszylinder direkt an die von der Stirnfläche des Plungerkolbens begrenzte Plungerkammer angeschlossen ist. Ein von dem Hauptzylinder zu einer zweiten Plungerkammer, die von der zweiten Stirnfläche des Plungerkolbens begrenzt wird, führender Druckmittelweg wird durch das Trennventil nicht unterbrochen; die axiale Verschiebung des Plungerkolbens während eines Regelvorganges wird folglich auf das Bremspedal übertragen.

Aus der DE 22 08 936 A1 ist ein Bremssystem bekannt, bei dem das Bremspedal elektrische Signale erzeugt, die mit Hilfe eines Antriebsmotors und eines axial verschiebbaren Kolbens in hydraulischen Bremsdruck umgesetzt werden.

Zur Antriebsschlupfregelung sind die vorgenannten bekannten Bremsanlagen weder vorgesehen noch geeignet.

Der Erfindung liegt nun die Aufgabe zugrunde, eine blockiergeschützte Bremsanlage zu schaffen, die mit vergleichsweise geringem Aufwand hergestellt werden kann und die sich dennoch durch eine effektive Schlupfregelung, hohen Regelungskomfort und hohe Betriebssicherheit auszeichnet. Ferner wurde eine Bremsanlage dieser Art gesucht, die sich sowohl zu Blockierschutzregelung als auch zur Antriebsschlupfregelung eignet. Schließlich war es noch Ziel der Erfindung, einen besonders einfachen, universell verwendbaren Bremsdruckmodulator für geregelte Kraftfahrzeug-Bremsanlagen zu entwickeln, der sich durch geringen Herstellungsaufwand, durch vergleichsweise geringe Reaktionszeiten und durch präzise Steuerbarkeit auszeichnet.

Es hat sich herausgestellt, daß sich diese Ziele durch eine Bremsanlage der eingangs genannten Art erreichen lassen, deren Besonderheit darin besteht, daß das Plungersystem mit dem Bremsdruckgeber über in der Grundstellung offene, auf Sperren umschaltbare Trennventile verbunden ist, daß im Regelfall der Bremsdruck in den Radbremsen der einzelnen geregelten Räder durch Ansteuerung des zentralen Plungersystems und der Radventile nach einem Multiplex-Verfahren nacheinander, d.h. zeitlich versetzt, moduliert wird und daß zur Bremsdruckregelung die Plungerkolben mit Hilfe eines elektrischen Antriebsmotors, welcher über eine Kupplungs- und Getriebeanordnung und über einen nicht selbsthemmenden Spindeltrieb mit den Plungerkolben verbunden ist, axial verschoben werden.

Bei einem Bremsdruckmodulator, der insbesondere für eine solche Bremsanlage geeignet ist und der im wesentlichen aus einem in einem Zylinder geführten Stellkolben, mit dem das Volumen einer Arbeitskammer, die sich in dem zu einer oder zu mehreren Radbremsen führenden Druckmittelweg befindet, variierbar ist und aus einem elektrischen Antriebsmotor sowie aus einer Kupplungs- und Getriebeanordnung mit einem nicht selbsthemmenden Spindeltrieb zur Umwandlung und Übertragung des Drehmomentes auf den Stellkolben besteht, ist erfindungsgemäß als Kupplungs- und Getriebeanordnung ein Planetengetriebe mit einem steuerbaren Festhalte- oder Bremssystem vorgesehen.

Die erfindungsgemäße Bremsanlage benötigt zur Blockierschutzregelung nur ein einziges zentrales Plungersystem, wenn durch Anwendung des Multiplex-Verfahrens in den einzelnen geregelten Rädern oder Radgruppen der Bremsdruck individuell auf den jeweils optimalen Wert eingeregelt werden kann. Da zum Unterbrechen des Druckmittelanschlusses an den Bremsdruckgeber während der Blockierschutzregelung auf Sperren umschaltbare Trennventile, beispielsweise elektromagnetisch umschaltbare 2/2-Wegeventile, verwendet werden, kann diese Unterbrechung des Druckmittelanschlusses sofort, d.h. unabhängig von der momentanen Stellung der Plungerkolben, herbeigeführt werden. Für die Regelgenauigkeit und Regelgeschwindigkeit, an die wegen des Multiplex-Betriebs höhere Anforderungen zu stellen sind, ist dies ein erheblicher Vorteil.

Nach einem vorteilhaften Ausführungsbeispiel der Erfindung sind der Bremsdruckgeber und das Plungersystem in an sich bekannter Weise als Tandem-Anordnungen ausgebildet und zum Anschluß von zwei hydraulisch getrennten Bremskreisen vorgesehen.

Nach einer weiteren Ausführungsart der Erfindung ist der elektrische Antriebsmotor der Plungerkolben in der Drehrichtung umkehrbar, so daß mit diesem Motor die Kolben sowohl in Richtung einer Bremsdruck-Reduzierung als auch einer Bremsdruck-Erhöhung verschiebbar sind.

Mit dieser Ausführungsart kann zum einen der Wiederanstieg des Bremsdruckes im Anschluß an einen Bremsdruckabbau im Zuge eines Regelungsvorganges variiert werden. Es ist ein besonders schneller, aber auch ein verzögerter Bremsdruckwiederanstieg möglich. Zum anderen läßt sich die Plungerkolben-Rückstellfeder als reine Notfeder und damit relativ schwach auslegen, weil die Bremsdruckerhöhung oder Wiedererhöhung durch die Umkehrung der Drehrichtung des Abtriebs unterstützt wird.

Andererseits ist es jedoch auch möglich, das Plungersystem mit einem Elektromotor unveränderlicher Drehrichtung zu versehen, der über eine Kupplungs- und Getriebeanordnung, mit der die Drehrichtung der Abtriebswelle umschaltbar ist, und über einen Spindeltrieb mit dem oder den Plungerkolben verbunden ist.

Erfindungsgemäß läßt sich eine Blockierschutz- und An triebsschlupfregelung mit Hilfe des nach dem Plungerprinzip aufgebauten Stellgliedes erreichen, wobei zur Erzeugung der erforderlichen Verschiebungskräfte und Steuerung der Bewegung des Plungerkolbens ein in der Drehrichtung umkehrbarer elektrischer Antrieb in Verbindung mit einem Spindeltrieb verwendet wird. Der Kolben ist aus einer Mittelstellung heraus in beiden axialen Richtungen verschiebbar, so daß sich mit dem Plunger sowohl ein Bremsdruckabbau, ein Bremsdruckaufbau bzw. Bremsdruckerzeugung und/oder eine Bremsdruckverstärkung erreichen läßt.

Nach einem vorteilhaften Ausführungsbeispiel einer solchen Bremsanlage zur Blockierschutz und Antriebsschlupfregelung ist als elekrischer Antriebsmotor ein Elektromotor mit konstanter Drehrichtung in Verbindung mit einer Kupplungs- und Getriebeanordnung, deren Abtriebsdrehrichtung umschaltbar ist, vorgesehen. In einer weiteren Schaltstellung der Kupplungs- und Getriebeanordnung sind Elektromotor und Spindeltrieb entkoppelt.

In vielen Fällen ist es günstig, wenn sich bei Stromausfall die Kupplung zwischen dem Motor und dem Spindeltrieb löst, so daß der Stellkolben dann sofort wieder seine durch die beidseitigen Federn definierte Ruhelage bzw. Mittellage, in der dieses Stellglied Bremsvorgänge nicht beeinflußt, einnehmen kann.

Bei einem Bremsdruckmodulator nach der Erfindung, der insbesondere für Bremsanlagen der vorgenannten Art geeignet ist, enthält die Kupplungs- und Getriebeanordnung ein Planetengetriebe mit einem steuerbaren Festhalte- oder Bremssystem. Solche Planetengetriebe lassen sich vollständig oder zumindest überwiegend aus Kunststoff herstellen und werden dadurch vergleichsweise billig. Bei dem hier vorgesehenen Anwendungsfall werden nämlich Zahnräder hoher Präzision nicht benötigt.

Mit diesen Getrieben wird gleichzeitig eine hohe Drehzahluntersetzung bzw. Drehmomentenwandlung erreicht, weshalb eine relativ einfacher und preiswerter Antriebsmotor zur Erzeugung der erforderlichen Verstellkräfte genügt.

In einem Ausführungsbeispiel der Erfindung wird ein Antriebsmotor mit festgelegter Drehrichtung verwendet, und das Stellglied entweder durch Federkraft in die Ausgangslage zurückgestellt oder mit Hilfe eines doppelten Planetensatzes eine Umkehr der Abtriebswellen-Drehrichtung zwecks gesteuertem Zurückstellen des Stellkolbens erreicht.

Ein weiterer Vorteil eines solchen Planetensatzes besteht darin, daß die Kupplung zwischen Antriebsmotor und Stellkolben und/oder die Drehrichtungsumkehr - bei Verwendung eines doppelten Planetensatzes - mit Hilfe mechanisch einfacher und mit geringem Aufwand herzustellender Komponenten erreichbar ist. Die zur Kupplung oder zur Umsteuerung aufzubringenden Kräfte sind gering.

Der Druckmittelweg zwischen der Arbeitskammer des Bremsdruckmodulators bzw. des Plungers und dem Bremsdruckgeber der angeschlossen Bremsanlage wird zweckmäßigerweise im Regelfall durch ein elektromagnetisch betätigbares Mehrwegeventil verschlossen, weil dieses - im Gegensatz zu einem bekannten, mechanisch betätigten Kugelsitzventil, das nur in der Endstellung des Stellkolbens geöffnet ist - zum geeigneten Zeitpunkt unabhängig von der momentanen Stellung des Kolbens auf Sperren umgeschaltet oder wieder zurückgeschaltet werden kann.

Das Planetengetriebe besteht in einem Ausführungsbeispiel aus einem einfachen Planetensatz, der sich wiederum aus einem Sonnenrad, aus einem oder mehreren Planetenrädern und aus einem innenverzahnten Hohlrad zusammensetzt.

Als Festhalte- oder Bremssystem ist erfindungsgemäß eine in der Ruhestellung gelöste, elektromagnetisch betätigbare Reibungsbremse geeignet, mit der Bauteile des Planetengetriebes abbremsbar sind. Dabei kann die Reibungsbremse auf das Hohlrad des Planetengetriebes einwirken.

Das Drehmoment des Antriebsmotors führt nach dem Betätigen des Festhalte- oder Bremssystems eine Verschiebung des Stellkolbens entgegen der Kraft einer Rückstellfeder und dadurch eine Vergrößerung des Volumens der Arbeitskammer herbei.

Nach einem weiteren vorteilhaften Ausführungsbeispiel der Erfindung ist das Planetengetriebe mit einem doppelten Planetensatz ausgerüstet und derart ausgebildet, daß durch Betätigung des Festhalte- oder Bremssystems die Drehrichtung der Abtriebswelle bei gleichbleibender Drehrichtung des Antriebsmotors umkehrbar ist. Bei einem Bremsdruckmodulator nach der Erfindung sind die Planetenradträger beider Planetensätze untereinander und über den Spindeltrieb mit dem Stellkolben gekoppelt, wobei der Antriebsmotor an ein Sonnenrad angeschlossen ist, das zu einem Planetensatz gehört, dessen Hohlrad mit dem Sonnenrad des zweiten Planetensatzes verbunden ist. Durch wahlweises Abbremsen des ersten oder des zweiten Hohlrades bei gleichbleibender Drehrichtung des Antriebsmotors ist in jedem Fall die Drehrichtung der Abtriebswelle umkehrbar.

Nach einem weiteren Ausführungsbeispiel der Erfindung ist in einer Schaltstellung des Feststelloder Bremssystems der Stellkolben gegen die Kraft einer Rückstellfeder verschiebbar, wobei das Feststell- oder Bremssystem derart ausgebildet ist, daß in einer zusätzlichen Schaltposition das Stellglied durch diese Federkraft zurückstellbar ist.

Das Planetengetriebe untersetzt zweckmäßigerweise die Drehzahlen des elektrischen Antriebsmotors etwa im Verhältnis von 1 : 3 bis 1 : 10.

Weitere Merkmale, Vorteile und Anwendungsmöglichkeiten der Erfindung gehen aus der folgenden Beschreibung von Ausführungsbeispielen anhand der beigefügten Abbildungen hervor.

Es zeigen in schematischer, vereinfachter Darstellung

Fig. 1 die hydraulische und elektrische Schaltung der wichtigsten Bauteile einer Bremsanlage mit Blockierschutzregelung der erfindungsgemäßen Art,

Fig. 2 eine weitere Ausführungsart einer Kupplungs- und Getriebeanordnung für die Bremsanlage nach Fig. 1,

Fig 3 in gleicher Darstellungsweise wie die Fig. 1 und 2 eine Bremsanlage mit Blockierschutz- und Antriebsschlupfregelung und

Fig. 4 als Teildarstellung eine Variante der Bremsanlage nach Fig. 3, nämlich die Anordnung von zwei Planetengetrieben mit jeweils doppeltem Planetensatz auf der Achse eines gemeinsamen Elektro-Antriebsmotors.

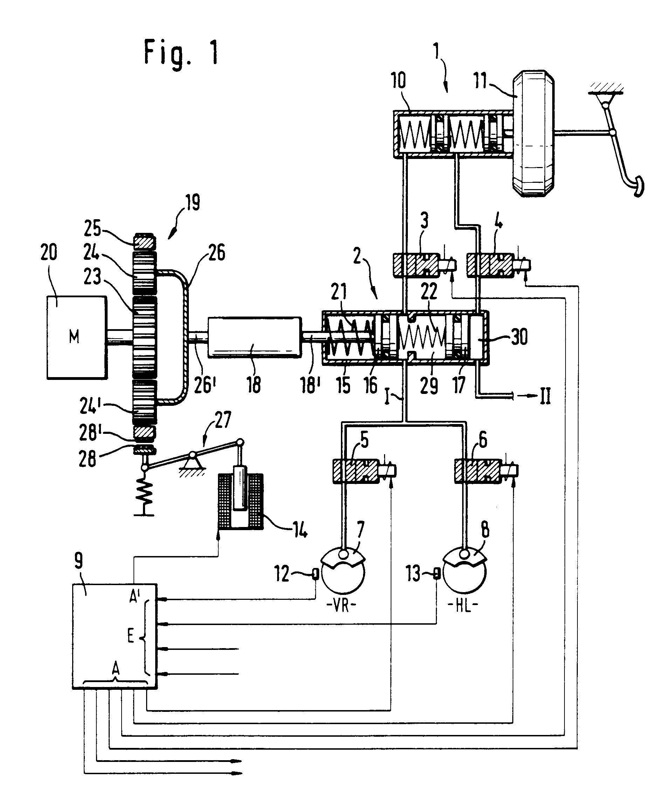

Die in Fig. 1 dargestellte Bremsanlage besteht im wesentlichen aus einem pedalbetätigten Bremsdruckgeber 1, einem zentralen Plungersystem 2, aus Trennventilen 3,4 zur Unterbrechung des Druckmittelweges vom Bremsdruckgeber 1 zum Plungersystem 2, aus Radventilen 5,6 im Druckmittelanschluß zu den Radbremsen 7,8 der geregelten Räder VR,HL und schließlich aus einem elektronischen Regler 9. Es handelt sich in dem wiedergegebenen Ausführungsbeispiel um eine zweikreisige Bremsanlage mit diagonaler Bremskreisaufteilung. Ein Bremskreis I führt zu dem rechten Vorderrad VR und linken Hinterrad HL, der Bremskreis II zu den beiden anderen Rädern.

Der Bremsdruckgeber 1 weist einen Tandem-Hauptzylinder 10 mit einem vorgeschalteten Verstärker 11 auf. Die Trennventile 3,4 sind ebenso wie die Radventile 5,6 als elektromagnetisch betätigbare 2/2-Wegeventile ausgebildet, die in ihrer Ruhestellung offen, d.h. auf Durchlaß, und nach Erregung auf Sperren geschaltet sind. Der Regler 9 enthält die elektronischen Schaltkreise zur Verarbeitung der Sensorsignale, die ihm von induktiven Meßwertaufnehmern 12,13 zugeführt werden, und zur Erzeugung von Bremsdruck-Steuersignalen, welche über die Ausgänge A den einzelnen Ventilen 3 - 6 zugeleitet werden. Ein weiterer Ausgang A' des Reglers 9 führt zu einer elektromagnetischen Betätigungseinrichtung 14, mit der sich der Antrieb des Plungersystems 2 steuern läßt.

Das zentrale Plungersystem 2 weist in dem dargestellten Ausführungsbeispiel einen Zylinder 15 auf, in dem zwei Plungerkolben 16,17 axial verschiebbar und abgedichtet geführt sind. Die Verschiebung nach links, die eine Erweiterung des Volumens und dadurch einen Bremsdruckabbau herbeiführt, wird durch einen Spindeltrieb 18 hervorgerufen, der über eine Kupplung, genauer gesagt eine Kupplungs- und Getriebeanordnung 19, mit einem elektrischen Antriebsmotor 20 verbunden ist. In ihrer dargestellten Ruhelage werden die Plungerkolben 16,17, solange die Blockierschutzregelung nicht angesprochen hat, durch eine Feder 21 gehalten, die, zusammen mit einer schwachen Feder 22, auch für die Rückstellung der Kolben nach dem Abkuppeln des Antriebsmotors 20 sorgt.

Die Kupplungs- und Getriebeanordnung 19 ist durch einen Planetensatz realisiert, der sich aus einem mit dem Antriebsmotor 20 gekoppelten Sonnenrad 23, mehreren, im allgemeinen drei, Planetenrädern 24,24' und einem Hohlrad 25 zusammensetzt. Die Planetenräder 24,24' sind drehbar auf einem Planetenradträger 26 angeordnet, der wiederum auf einer Planetenradträgerwelle 26' sitzt, die hier als Abtriebswelle dient In dem Spindeltrieb 18 wird die Rotation der Welle 26' in eine Axialverschiebung umgesetzt, die schließlich über eine Kolbenstange 18' zur axialen Verschiebung der Plungerkolben 16,17 führt.

Eine Momentenübertragung von dem Motor 20 auf den Spindeltrieb 18 ist bei dem dargestellten Planetensatz erst nach dem Festhalten des Hohlrades 25 möglich. Hierzu ist ein Festhalte- oder Bremssystem 27 vorgesehen, das über Reibbeläge 28,28' verfügt und in Funktion tritt, sobald der Elektromagnet 14, durch den die Reibpaare 28,28' in Eingriff gelangen, eingeschaltet ist.

Die dargestellte Bremsanlage arbeitet wie folgt: Solange die Blockierschutzregelung nicht anspricht, bleiben alle Mehrwegeventile 3 - 6 in ihrer Ruhestellung, in der der Druckmittelweg durch die Ventile hindurch offen ist. Das Festhalte- oder Bremssystem 27 bleibt ebenfalls gelöst, so daß der Motor 20 und der Spindeltrieb 18 und damit das Plungersystem 2 entkuppelt sind. Die Rückstellfeder 21 hält den Plungerkolben 16 in der dargestellten Ruhelage. Der Kolben 17 wird beidseitig mit gleichem Druck beaufschlagt.

Tritt an einem Fahrzeugrad eine Blockiertendenz auf, was durch Vergleich und logische Verknüpfung der mit den einzelnen Radsensoren 12,13 gewonnenen Signale, die in dem Regler 9 verarbeitet werden, erkennbar ist, setzt die Blockierschutzregelung ein.

Durch die Bremsdrucksteuersignale an den Ausgängen A,A' des Reglers 9 wird der Elektromagnet 14 eingeschaltet und dadurch das Hohlrad 25 der Kupplungs- und Getriebeanordnung 19 festgehalten bzw. abgebremst. Durch Umschalten der Trennventile 3,4 wird der Druckmittelweg vom Bremsdruckgeber 1 zu dem Plungersystem 2 unterbrochen. Die Radventile 5,6 des dargestellten Bremskreises I und die entsprechenden Ventile im Bremskreis II, der den gleichen Aufbau besitzt und daher nicht abgebildet ist, werden ebenfalls auf Sperren umgeschaltet, mit der Ausnahme desjenigen Radventils, das zu dem die Blockiertendenz zeigenden Rad führt.

Durch das Abbremsen des Hohlrades 25 wird nun ein Drehmoment von dem inzwischen eingeschalteten oder ständig laufenden Elektromotor 20 über das Sonnenrad 23, die Planetenräder 24,24', den Planetenradträger 26 und Welle 26' auf den Spindeltrieb 18 übertragen. Dies führt zur Verschiebung der Plungerkolben 16,17 entgegen der Kraft der Feder 21 nach links. Dies hat die beabsichtigte Volumenerweiterung in den Kammern 29 und 30 des Plungersystems 2 und damit einen Bremsdruckabbau in der zu diesem Zeitpunkt über das auf Durchlaß geschaltete Radventil angeschlossenen Radbremse zur Folge. In den anderen Radbremsen bleibt der Bremsdruck konstant, da die zugehörigen Ventile auf Sperren umgeschaltet wurden.

Sobald an dem instabil gewordenen bzw. Blockiertendenz zeigenden Rad der Bremsdruck auf das gewünschte, von dem Regler 9 vorgegebene Niveau abgesenkt wurde, wird durch Umschalten des zugehörigen Radventils das Druckmittel eingeschlossen, so daß nun in den anderen Radbremsen in entsprechender Weise nach dem Multiplex-Verfahren der Druckaufbau fortgesetzt oder der Druck auf einen anderen, höheren oder niedrigeren Wert eingeregelt werden kann. Zur Fortsetzung des Druckabbaues oder zum Wiederaufbau des Druckes wird durch Abschalten des Elektromagneten 14 und Lösen der Reibpaare 28,28' das Hohlrad 25 freigegeben, das nun mitläuft und dadurch die Übertragung von Drehmomenten über die Anordnung 19 unterbindet. Außerdem wird durch diesen "Freilauf" die Zurückstellung der Plungerkolben 16,17 und des Spindeltriebs 18 durch die Kraft der Feder 21 ermöglicht.

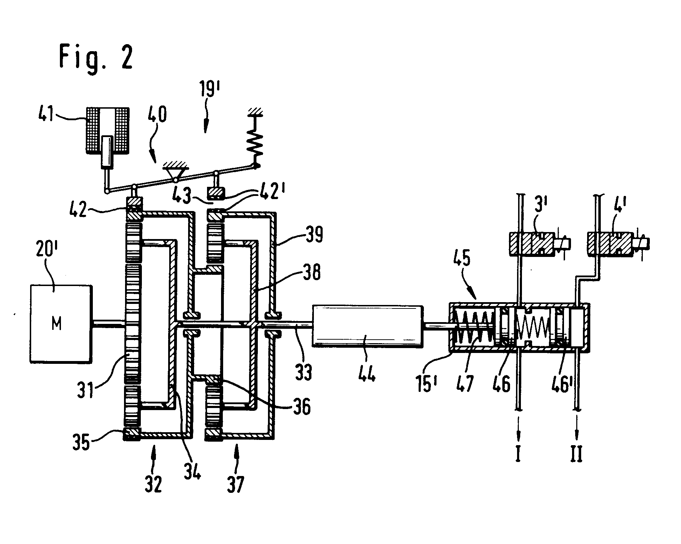

In der Ausführungsart nach Fig. 2 besteht die Kupplungs- und Getriebeanordnung 19' aus einem doppelten Planetensatz.

Der Antriebsmotor 20' ist ebenso wie in der Ausführungsart nach Fig. 1 über seine Welle mit dem Sonnenrad 31 eines Planetensatzes 32 verbunden, während die Abtriebswelle 33 dieser Getriebeanordnung 19' an dem Planetenradträger 34 dieses Planetensatzes 32 angeschlossen ist. Das Hohlrad 35 dieses Planetensatzes 32 ist mit dem Sonnenrad 36 eines zweiten Planetensatzes 37 gekoppelt, dessen Planetenradträger 38 über die Welle 33 unmittelbar mit dem Planetenradträger 34 des ersten Planetensatzes 32 verbunden ist. Das auf der Welle 33 rotierende Hohlrad des zweiten Planetensatzes ist mit 39 bezeichnet. Mit Hilfe eines elektromagnetisch betätigbaren Festhalte- oder Bremssystems 40 wird entweder das zuerst beschriebene oder das zweite Hohlrad festgehalten bzw. abgebremst. Eine Umschaltung des Festhalte- oder Bremssystems 40 hat daher eine Umkehr der Drehrichtung der Abtriebswelle 33 bei gleichbleibender Drehrichtung des Elektromotors 20' zur Folge.

In der dargestellten Ruhelage, d.h. bei noch nicht eingeschaltetem Elektromagnet 41, wird durch Eingriff der in der Abbildung angedeuteten Reibbeläge 42 das Hohlrad 35 des ersten Planetensatzes festgehalten, während der Bremsmechanismus 43 mit den Reibbelägen 42' für das zweite Hohlrad 39 gelöst ist. Durch Erregung des Elektromagneten 41 wird das erste Hohlrad freigegeben, das zweite Hohlrad dagegen festgehalten.

Über einen Spindeltrieb 44 führt die Drehung der Abtriebswelle 33 zu einer axialen Verschiebung der Kolben im Inneren des Zylinders 15' des Plungersystems 45. Obwohl es sich bei dem Antriebsmotor 20' um einen Elektromotor mit bestimmter Drehrichtung handelt, läßt sich das Drehmoment dieses Motors zur Verschiebung der Kolben 46,46' des Plungersystems 45 in beiden Richtungen - je nach Schaltstellung des Festhalte- oder Bremssystems 40 - einsetzen, so daß durch entsprechende Steuerung des Motors 20' und des Systems 40 die Geschwindigkeit und die Dauer sowohl des Bremsdruckabbaues als auch des Bremsdruckaufbaues variiert werden können. Die Feder 47 im Inneren des Plungersystems 45 unterstützt die Zurückstellung der Kolben 46,46' in ihre Ruhelage, die sie während normaler Bremsvorgänge einnehmen, und dient als sogen. Notfeder zur Aufrechterhaltung der Bremsenfunktion bei Stromausfall sowie bei bestimmten Defekten im Modulatorsystem.

Die Trennventile 3',4' am Eingang des Plungersystems 45 und die nicht dargestellten, zu der Bremsanlage nach Fig. 2 gehörenden Komponenten der Bremsanlage stimmen mit denjenigen der Anlage nach Fig. 1 im Prinzip überein, wobei allerdings bei der Programmierung des Reglers, sofern Microcomputer verwendet werden, oder bei der Auslegung der elektronischen Schaltkreise, mit denen die Sensorsignale verarbeitet und die Steuersignale erzeugt werden, die Besonderheiten des steuerbaren doppelten Planetensatzes 40 zu berücksichtigen sind.

Ist keine Leerlaufstellung des Festhalte- oder Bremssystems 40 vorgesehen, wird der Elektromotor 20' durch jeden Steuerbefehl zur Verschiebung der Plungerkolben 46,46' ein- und wieder ausgeschaltet. Es ist jedoch auch möglich, die Rückstellkraft der Feder 47 im Inneren des Plungersystems 45 in die Regelung einzubeziehen und die Rückstellung nur in bestimmten Regelphasen durch das Drehmoment des Motors 20' zu unterstützen. Durch die Umschaltbarkeit der Drehrichtung mit Hilfe des doppelten Planetensatzes 40, ggf. unter Einbeziehung einer Freilaufstellung des Bremssystems 40, sind je nach Anwendungsfall und Anforderungen zahlreiche Regelvarianten auf sehr einfache Weise realisierbar.

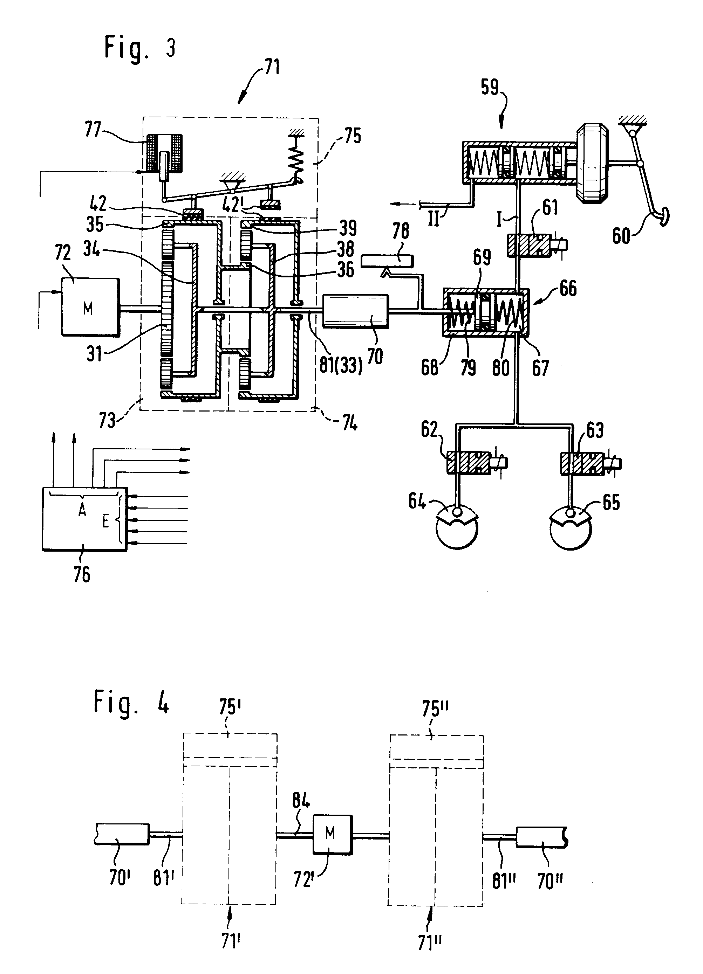

Fig. 3 dient zur Erläuterung einer Bremsanlage mit Blockierschutz- und Antriebsschlupfregelung. Es handelt sich wiederum um einen zweikreisigen hydraulischen Bremsdruckgeber 59, der über ein Bremspedal 60 betätigt wird. An die beiden Bremskreise I,II sind über elektromagnetisch betätigbare Mehrwegeventile 61,62,63 die Radbremsen 64,65 der geregelten Fahrzeugräder angeschlossen. Da beide Bremskreise I,II gleich aufgebaut sind, wurden nur die an den Bremskreis I angeschlossenen Bauteile dargestellt.

Zur Blockierschutz- und Antriebsschlupfregelung ist gemäß Fig. 3 in den Druckmittelweg, der von dem Bremsdruckgeber 59 zu den Radbremsen 64,65 führt, ein Plungersystem 66 mit einer Arbeitskammer 67 eingefügt, die durch die Stirnfläche eines in einem Zylinder 68 abgedichtet geführten Plungerkolbens 69 begrenzt wird und deren Volumen durch Verschieben dieses Kolbens 69 variierbar ist. Das in dem Druckmittelweg, der den Bremsdruckgeber 59 und die Arbeitskammer 67 verbindet, eingefügte Ventil 61 ist das Trennventil. Während der Regelphasen verhindert es einen Druckmittelfluß vom Bremsdruckgeber 59 zu der Kammer 67 bzw. von der Kammer 8 zu dem Bremsdruckgeber hin. Die Radventile 62,63, die in dem Druckmittelweg, der von der Kammer 67 zu den Radbremsen 64,65 führt, eingefügt sind, dienen während der Regelvorgänge zur radindividuellen Regelung des Bremsdruckes.

Der Kolben 69 nimmt in dem Zylinder 68 normalerweise, d.h. bei nicht betätigter Bremse und bei ungeregelten Bremsvorgängen, eine Mittelstellung ein. Daher kann durch Verschieben dieses Kolbens - je nach Verschiebungsrichtung - das Volumen der Arbeitskammer 67 entweder vergrößert oder verringert werden. Bei Einsetzen einer Blockierschutzregelung ist nämlich zunächst eine Volumenvergrößerung, bei einer Antriebsschlupfregelung dagegen zu Beginn eine Volumenverringerung erforderlich.

Zum Verschieben des Kolbens 69 und damit zur Blockierschutz- und Antriebsschlupfregelung wird eine Anordnung verwendet, die sich im wesentlichen aus einem Spindeltrieb 70, einem Planetengetriebe 71 und einem Elektromotor 72 zusammensetzt. Es handelt sich um einen doppelten Planetensatz 73,74 mit einem elektrisch steuerbaren Festhalte- oder Bremssystem 75. Ein im Prinzip gleiches System zur axialen Verschiebung des oder der Kolben des Plungersystems 66 bzw. 45 wurde bereits anhand der Fig. 2 beschrieben. Darauf wird verwiesen. Für die Sonnenräder (31,36), die Planetenradträger (34,38), die Hohlräder (35,36) und für die Reibbeläge (42,42') wurden daher in Fig. 3 die gleichen Bezugsziffern wie in Fig. 2 gewählt.

In Fig. 3 ist außerdem noch ein elektronischer Regler 76 angedeutet, dem über die Eingänge E auf hier nicht näher beschriebenem Wege Informationen über das Drehverhalten der einzelnen Fahrzeugräder und damit über einen stabilen Lauf, über ein bevorstehendes Blockieren oder über ein Durchdrehen eines Rades zugeführt werden und an dessen Ausgängen A die Steuerbefehle für die Trenn- und für die Radventile 61,62,63, für einen Umschaltelektromagneten 77 des Planetengetriebes 71 und für den Antriebsmotor 72 zur Verfügung stehen. Außerdem kann die momentane Stellung des Kolbens 69 über einen symbolisch angedeuteten Weggeber 78, der sich durch ein Potentiometer oder - in Verbindung mit digitalen elektronischen Systemen - durch einen Umdrehungszähler verwirklichen läßt, gemessen und ebenfalls in den Regler 76 eingespeist werden.

Die Bremsanlage nach Fig. 3 arbeitet wie folgt: Bei normalen Bremsvorgängen und nicht zum Durchdrehen neigenden Fahrzeugrädern bleiben das Trennventil 61 und die Radventile 62,63 auf Durchlaß geschaltet. Der Kolben 69 wird durch kräftige Federn 79,80 und/oder durch Festhalten des Getriebes 71 sowie des Antriebsmotors 72 in der gezeigten Mittellage gehalten und läßt dadurch keine Änderung des Volumens der Arbeitskammer 67 zu.

Tritt nun während des Bremsvorganges an einem der Fahrzeugräder eine Blockiertendenz auf, setzt die Blockierschutzregelung ein. Durch Umschalten des Ventiles 61 in die Sperrstellung wird zunächst ein weiterer Druckmittelzufluß unterbunden. Der Motor 72 wird eingeschaltet und eines der beiden Hohlräder, hier sei es das Hohlrad 35, durch die Festhalte- oder Abbremseinrichtung 75 festgehalten. Dadurch wird der Kolben 69 entgegen der Kraft der Feder 79 nach links verschoben, was eine Vergrößerung des Volumens der Arbeitskammer 67 und damit eine Reduzierung des Druckes in der Radbremse des angeschlossenen Rades, nämlich des zur Blockierung neigenden Rades, zur Folge hat. Durch zeitweises Umschalten der zu den weiterhin stabil laufenden Rädern führenden Radventile wird verhindert, daß sich der durch die Verschiebung des Kolbens 69 herbeigeführte Druckabbau auch in der Radbremse der stabil laufenden Räder bemerkbar macht.

Nach dem sogenannten Multiplex-Verfahren kann danach durch entsprechende Ansteuerung der Radventile 62,63 und Variation des Druckes mit Hilfe des Kolbens 69 der Bremsdruck in den anderen Radbremsen auf das gewünschte Niveau eingestellt werden. Auf diese Weise läßt sich mit einer einzigen Arbeitskammer 67 und den zugehörigen Komponenten zur Variation des Kammervolumens der Bremsdruck an mehreren angeschlossenen Radbremsen individuell modulieren.

Zum Wiederaufbau des Druckes während einer Blockierschutzregelphase wird durch Umschalten der Einrichtung 75 die Drehrichtung einer Abtriebswelle 81 umgekehrt, dadurch der Kolben 10 wieder in Gegenrichtung verschoben und damit das Volumen der Arbeitskammer 67 verringert.

Eine Antriebsschlupfregelung setzt ein, wenn z.B. beim Anfahren auf glatter Fahrbahn eines der angetriebenen Räder Durchdrehtendenz zeigt. Da in dieser Situation die Bremse nicht betätigt ist, kann ein Bremsdruck nur durch Verschieben des Kolbens 69 nach rechts, d.h. in Richtung auf eine Verringerung des Volumens der Kammer 67 erfolgen, wobei durch Umschalten des Trennventils 61 ein Abfließen von Druckmittel zum Bremsdruckgeber 59 hin verhindert werden muß. Mit Hilfe der Radventile 62 oder 63 läßt sich wiederum erreichen, daß sich der Druckaufbau nur in der Radbremse 64 oder 65 des zu schnell drehenden Rades auswirkt.

Da in dem Ausführungsbeispiel nach Fig. 3 die Schaltstellung der Festhalte- oder Bremssystems 75 in der Ruhestellung derart gewählt wurde, daß sich nach dem Einschalten des Motors 72 der Kolben nach links verschiebt, muß zu Beginn der Antriebsschlupf-Regelung durch Einschalten der Magnetspule 77 die Umschaltvorrichtung 26 betätigt und dadurch der Drehsinn der Abtriebswelle 82 umgekehrt werden.

Zum Druckabbau während einer Antriebsschlupfregelphase nach erfolgtem Abbremsen des zum Durchdrehen neigenden Rades kann entweder der Kolben 69 mit Hilfe des Motors 72 und Zurückschalten des Systems 75 zurückgestellt werden, oder es kann durch Zurückschalten des Trennventiles 61 ein Bremsdruckabbau über dieses Ventil zum Bremsdruckgeber 59 hin erfolgen. Eine selbsttätige Zurückstellung des Kolbens in die Ausgangslage durch die Kraft der Feder 80 ist ebenfalls möglich, wozu jedoch durch eine nicht gezeigte zusätzliche Schaltstellung der Einrichtung 75 der Rotor des Motors 72 von dem Spindeltrieb 70 abgekoppelt werden müßte. Selbstverständlich ist es auch möglich, diese verschiedenen Maßnahmen zu kombinieren, wozu die mit Hilfe der Wegmeßeinrichtung bzw. des Weggebers 70 gewonnenen Informationen über die Kolbenstellung dem Regler von Nutzen sind.

Fig. 4 veranschaulicht eine Ausführungsart der Erfindung, bei der auf einer Rotorwelle 84 des Elektromotors 72' zwei gleichartige Getriebeanordnungen 71',71" der in Fig. 3 dargestellten und erläuterten Art angebracht sind. Über die zugehörigen Abtriebswellen 81' und 81" werden die Abtriebsmomente der beiden Getriebeanordnungen 71',71" auf die Spindeltriebe 70',70" und von diesen auf (nicht gezeigte) Kolben und Arbeitskammern übertragen. Mit der Anordnung nach Fig. 4 läßt sich bei Verwendung nur eines Antriebsmotors 72' eine weitgehend unabhängige Bremsdruckregelung in den beiden Kreisen eines zweikreisigen hydraulischen Bremssystems erreichen. Eine volle Unabhängigkeit ist dann gegeben, wenn z.B. durch eine zusätzliche Schaltstellung der Festhalte- oder Bremssystems 75',75" eine Entkopplung zwischen Motor 72' und Spindeltrieb 70',70" einstellbar ist.

Der in den Ausführungsbeispielen nach den Figuren 1-4 im Zusammenhang mit Bremsanlagen mit Blockierschutzregelung oder mit Blockierschutz- und Antriebsschlupfregelung beschriebene Bremsdruckmodulator, der sich im wesentlichen aus dem oder den in einem Plungersystem geführten Stellkolben, einem elektrischen Antriebsmotor, einem einfachen oder doppelten Planetengetriebe und aus einem nicht selbsthemmenden Spindeltrieb zusammensetzt, zeichnet sich durch seinen einfachen Aufbau und durch seine einfache Steuerbarkeit aus. Mit Hilfe solcher Bremsdruckmodulatoren gemäß der Erfindung lassen sich auch Blockierschutz- und/oder Antriebsschlupfregelsysteme mit vergleichsweise sehr geringen Herstellungsaufwand realisieren.

**Patentansprüche**

1. Bremsanlage mit Blockierschutz- und/oder Antriebsschlupfregelung, bestehend im wesentlichen aus einem pedalbetätigten hydraulischen Bremsdruckgeber, aus einem zwischen dem Bremsdruckgeber und den Radbremsen in die Druckmittelwege eingefügten Bremsdruckmodulator in Form eines zentralen Plungersystems (2,45,66), das mindestens einen axial verschiebbaren Plungerkolben (16,17,46,46',69) aufweist und mit dem durch Volumenänderung mindestens eines das Hydraulikmedium enthaltenden Raumes der Bremsdruck variierbar ist und an das die Radbremsen über in der Ruhestellung offene, auf Sperren umschaltbare Radventile (5,6,62,63) angeschlossen sind, sowie aus Sensoren zur Ermittlung des Raddrehverhaltens und elektronischen Schaltkreisen zur Verarbeitung der Sensorsignale und zur Erzeugung von Bremsdruck-Steuersignalen, dadurch **gekennzeichnet,** daß das Plungersystem (2,45,66) mit dem Bremsdruckgeber (1) über in der Grundstellung offene, auf Sperren umschaltbare Trennventile (3,4,3',4',61) verbunden ist, daß im Regelfall der Bremsdruck in den Radbremsen der einzelnen geregelten Räder durch Ansteuerung des zentralen Plungersystems (2,45,48,66) und der Radventile (5,6,62,63) nach einem Multiplex-Verfahren nacheinander, d.h. zeitlich versetzt, moduliert wird und daß zur Bremsdruckregelung die Plungerkolben (16,17,46,46',69) mit Hilfe eines elektrischen Antriebsmotors (20,20',72,72'), welcher über eine Kupplungs-und Getriebeanordnung (19,19',71,71',71") und über einen nicht selbsthemmenden Spindeltrieb (18,44,70,70',70") mit den Plungerkolben verbunden ist, axial verschoben werden.

2. Bremsanlage nach Anspruch 1, dadurch **gekennzeichnet,** daß der Bremsdruckgeber (1,59) und das Plungersystem (2,45) in an sich bekannter Weise als Tandem-Anordnungen ausgebildet und zum Anschluß von zwei hydraulisch getrennten Bremskreisen (I,II) vorgesehen sind.

3. Bremsanlage nach Anspruch 1 oder 2, dadurch **gekennzeichnet,** daß der elektrische Antriebsmotor (20,20',72,72') der Plungerkolben (46,46',69) in der Drehrichtung umkehrbar ist und daß mit diesem Motor die Kolben sowohl in Richtung einer Bremsdruck-Reduzierung als auch einer Bremsdruck-Erhöhung verschiebbar sind.

4. Bremsanlage nach Anspruch 1 oder 2, dadurch **gekennzeichnet,** daß als Antriebsmotor ein Elektromotor (20',72,72') konstanter Drehrichtung vorgesehen ist, der über eine Kupplungs- und Getriebeanordnung (19',71',71"), mit der die Drehrichtung der Abtriebswelle (33,81) umschaltbar ist, und über den Spindeltrieb (44,70,70',70") mit den Plungerkolben (46,46',69) verbunden ist.

5. Bremsanlage nach Anspruch 1 oder 2, dadurch **gekennzeichnet,** daß als elektrischer Antriebsmotor ein Elektromotor (72) mit konstanter Drehrichtung in Verbindung mit einer Kupplungs- und Getriebeanordnung (71,71',71"), deren Abtriebsdrehrichtung umschaltbar ist, vorgesehen ist.

6. Bremsanlage nach Anspruch 5, dadurch **gekennzeichnet,** daß in einer weiteren Schaltstellung der Kupplungs- und Getriebeanordnung (71,71',71") der Elektromotor (72,72') und der Spindeltrieb (70,70',70") bzw. der Kolben (69) entkuppelt sind.

7. Bremsanlage nach Anspruch 1, dadurch **gekennzeichnet,** daß der Plungerkolben (69) in dem Zylinder (68) mit Hilfe von Rückstellfedern (79,80) in einer Mittellage gehalten ist.

8. Bremsanlage nach Anspruch 7, dadurch **gekennzeichnet,** daß im stromlosen Zustand der Elektromotor (72,72') von dem Spindeltrieb (70,70',70") bzw. von dem Stellkolben (69) abgekuppelt ist.

9. Bremsdruckmodulator, insbesondere für eine Bremsanlage nach Anspruch 1, bestehend im wesentlichen aus einem in einem Zylinder geführten Stellkolben, mit dem das Volumen einer Arbeitskammer, die in dem zu einer oder zu mehreren Radbremsen führenden Druckmittelweg eingefügt ist, variierbar ist, aus einem elektrischen Antriebsmotor und aus einer Kupplungs- und Getriebeanordnung mit einem nicht selbsthemmenden Spindeltrieb zur Umwandlung und Übertragung des Motordrehmomentes auf den Stellkolben, dadurch **gekennzeichnet,** daß als Kupplungs- und Getriebeanordnung (19,19';71,71',71") ein Planetengetriebe mit einem steuerbaren Festhalte- oder Bremssystem (27,40,75,75',75") vorgesehen ist.

10. Bremsdruckmodulator nach Anspruch 9, dadurch **gekennzeichnet,** daß das Planetengetriebe (19) einen aus einem Sonnenrad (23), aus Planetenrädern (24,24') und aus einem innenverzahnten Hohlrad (25) bestehenden einfachen Planetensatz aufweist.

11. Bremsdruckmodulator nach Anspruch 10, dadurch **gekennzeichnet,** daß das Festhalte- oder Bremssystem (27) im wesentlichen aus einer in der Ruhestellung gelösten, elektromagnetisch betätigbaren Reibungsbremse (28,28') besteht, mit der Bauteile des Planetengetriebes (19) abbremsbar sind.

12. Bremsdruckmodulator nach Anspruch 11, dadurch **gekennzeichnet,** daß die Reibungsbremse (28,28') auf das Hohlrad (25) des Planetengetriebes (19) einwirkt.

13. Bremsdruckmodulator nach einem der Ansprüche 9 bis 12, dadurch **gekennzeichnet,** daß nach dem Betätigen des Festhalte- oder Bremssystems (27,40,75,75',75") das Drehmoment des Antriebsmotors (20,20',72,72') eine Verschiebung des Stellkolbens (16,64,69) entgegen der Kraft einer Rückstellfeder (21,47,79) und dadurch eine Vergrößerung des Volumens der Arbeitskammer (29,30,67) herbeiführt.

14. Bremsdruckmodulator nach Anspruch 13, dadurch **gekennzeichnet,** daß das Planetengetriebe (19',71,71',71") mit einem doppelten Planetensatz (32,37,73,74) ausgerüstet und derart ausgebildet ist, daß durch Betätigung des Festhalte- oder Bremssystems (40,75,75',75") die Drehrichtung der Abtriebswelle (33,81,81',81") bei gleichbleibender Drehrichtung des Antriebsmotors (20',72,72') umkehrbar ist.

15. Bremdruckmodulator nach Anspruch 14, dadurch **gekennzeichnet,** daß die Planetenradträger (34,38) beider Planetensätze (32,37,73,74) untereinander und über den Spindeltrieb (44,70,70',70") mit dem Stellglied bzw. Stellkolben (46,46',69) gekoppelt sind und daß der Antriebsmotor (20' ,72 ,72') an ein Sonnenrad (31) angeschlossen ist, das zu einem Planetensatz (32,73) gehört, dessen Hohlrad (35) mit dem Sonnenrad (36) des zweiten Planetensatzes (37,74) verbunden ist, wobei durch wahlweises Abbremsen des ersten oder des zweiten Hohlrades (35 bzw. 39) bei gleichbleibender Drehrichtung des Antriebsmotors (20,72,72') die Drehrichtung der Abtriebswelle (33,81,81',81") umkehrbar ist.

16. Bremsdruckmodulator nach Anspruch 14 oder 15, dadurch **gekennzeichnet,** daß in einer Schaltstellung des Feststell- oder Bremssystems (40,75,75',75") der Stellkolben (46,69) gegen die Kraft einer Rückstellfeder (47,79,80) verschiebbar ist, wobei das Feststell- oder Bremssystem derart ausgebildet ist, daß in einer zusätzlichen Schaltposition das Stellglied durch diese Federkraft zurückstellbar ist.

17. Bremsdruckmodulator nach einem der Ansprüche 9 bis 16, dadurch **gekennzeichnet,** daß die Arbeitskammer (29,30,67') über ein elektromagnetisch steuerbares Mehrwegeventil (3,3',4,4',61), insbesondere ein 2/2-Wegeventil, an den Bremsdruckgeber (1,59) einer Bremsanlage angeschlossen ist.

18. Bremsdruckmodulator nach einem der Ansprüche 9 bis 17, dadurch **gekennzeichnet,** daß das Planetengetriebe (19,19',32,37,73,74) vollständig oder überwiegend aus Kunststoff besteht.

19. Bremsdruckmodulator nach einem der Ansprüche 9 bis 18, dadurch **gekennzeichnet,** daß das Planetengetriebe (19,19',71,71',71") die Drehzahl des elektrischen Antriebsmotors etwa im Verhältnis 1 : 3 bis 1 : 10 untersetzt.

**Claims**

1. A brake system with anti-lock control and/or traction slip control, composed substantially of a pedal-operated hydraulic braking pressure generator, of a braking pressure modulator which is inserted into the pressure fluid conduits between the braking pressure generator and the wheel brakes and which is configured like a central plunger system (2, 45, 66) comprising at least one axially slidable plunger piston (16, 17, 46, 46', 69) and serving to vary the braking pressure by change in volume of at least one chamber containing the hydraulic medium, and to which plunger system the wheel brakes are connected via wheel valves (5, 6, 62, 63) open in the inactive position and adapted to switch over to close, as well as of sensors for determining the wheel rotational behaviour and of electronic circuits for processing the sensor signals and for generating braking-pressure control signals,
**characterized** in that the plunger system (2, 45, 66) is connected with the braking pressure generator (1) via separating valves (3, 4, 3', 4', 61) which are open in their initial position and which can be switched to close, in that during control action the braking pressure in the wheel brakes of the individually controlled wheels is modulated by activating the central plunger system (2, 45, 48, 66) and the wheel valves (5, 6, 62, 63) according to a Multiplex method consecutively, that means deferred, and in that for braking pressure control the plunger pistons (16, 17, 46, 46', 69) are displaced axially by means of an electric drive motor (20, 20', 72, 72') which is coupled with the plunger pistons via a clutch-and-gear assembly (19, 19', 71, 71', 71") and via a worm drive (18, 44, 70, 70', 70") without self-locking engagement.

2. A brake system as claimed in claim 1, **characterized** in that the braking pressure generator (1, 59) and the plunger system (2, 45) are designed as tandem arrangements in a manner known per se and are provided for the connection of two hydraulically isolated brake circuits (I, II).

3. A brake system as claimed in claim 1 or 2, **characterized** in that the electric drive motor (20, 20', 72, 72') of the plunger pistons (46, 46', 69) is reversible in the direction of rotation, and in that by way of this motor the pistons are displaceable both in the direction of a braking pressure reduction and a braking pressure increase.

4. A brake system as claimed in claim 1 or 2, **characterized** in that an electric motor (20', 72, 72') of constant direction of rotation is provided as a drive motor and is coupled with the plunger pistons (46, 46', 69) via a clutch-and-gear assembly (19', 71', 71") by which latter the direction of rotation of the output shaft (33, 81) is reversible, as well as via the worm drive (44, 70, 70', 70").

5. A brake system as claimed in claim 1 or 2, **characterized** in that an electric motor (72) of constant direction of rotation is provided as an electric drive motor in conjunction with a clutch-and-gear assembly (71, 71', 71"), the output-member direction of rotation of which is reversible.

6. A brake system as claimed in claim 5, **characterized** in that in another operating position of the clutch-and-gear assembly (71, 71', 71"), the electric motor (72, 72') and the worm drive (70, 70', 70") and, respectively, the piston (69) are decoupled.

7. A brake system as claimed in claim 1, **characterized** in that the plunger piston (69) in the cylinder (68) is retained in a mid-position by means of resetting springs (79, 80).

8. A brake system as claimed in claim 7, **characterized** in that, in the de-energized condition, the electric motor (72, 72') is uncoupled from the worm drive (70, 70', 70") and from the adjusting piston (69), respectively.

9. A braking pressure modulator, in particular for a brake system as claimed in claim 1, substantially composed of an adjusting piston guided in a cylinder and serving to vary the volume of a working chamber that is inserted into the pressure fluid conduit leading to one or more of the wheel brakes, of an electric drive motor and of a clutch-and-gear assembly with a worm drive without self-locking engagement for the conversion and transmission of the motor torque onto the adjusting piston, **characterized** in that a planetary gear with a controllable stopping or braking system (27, 40, 75, 75', 75") is provided as a clutch-and-gear assembly (19, 19'; 71, 71', 71").

10. A braking pressure modulator as claimed in claim 9, **characterized** in that the planetary gear (19) comprises a single unit of planets composed of a sun wheel (23), planet pinions (24, 24') and an internal geared wheel (25).

11. A braking pressure modulator as claimed in claim 10, **characterized** in that the stopping or braking system (27) is substantially composed 35 an electromagnetically operable friction brake (28, 28') which is released in the inactive position and which allows to brake component parts of the planetary gear (19).

12. A braking pressure modulator as claimed in claim 11, **characterized** in that the friction brake (28, 28') acts on the internal geared wheel (25) of the planetary gear (19).

13. A braking pressure modulator as claimed in any one of the claims 9 to 12, **characterized** in that, after actuation of the stopping or braking system (27, 40, 75, 75', 75"), the torque of the drive motor (20, 20', 72, 72') causes displacement of the adjusting piston (16, 64, 69) in opposition to the force of a resetting spring (21, 47, 79) and thereby causes increase of the volume of the working chamber (29, 30, 67).

14. A braking pressure modulator as claimed in claim 13, **characterized** in that the planetary gear (19', 71, 71', 71") is equipped with a double unit of planets (32, 37, 73, 74) and is designed such that actuation of the stopping or braking system (40, 75, 75', 75") enables to reverse the direction of rotation of the output shaft (33, 81, 81', 81"), while the direction of rotation of the drive motor (20', 72, 72') remains the same.

15. A braking pressure modulator as claimed in claim 14,
   **characterized** in that the planet carriers (34, 38) of both units of planets (32, 37, 73, 74) are coupled one to the other and are coupled via the worm drive (44, 70, 70', 70") with the adjusting element or adjusting piston (46, 46', 69), and in that the drive motor (20', 72, 72') is connected to a sun wheel (31) belonging to a unit of planets (32, 73) whose internal geared wheel (35) is coupled to the sun wheel (36) of the second unit of planets (37, 74), with the direction of rotation of the output shaft (33, 81, 81', 81") being reversible by alternatively braking the first or the second internal geared wheel (35 or 39), while the direction of rotation of the drive motor (20, 72, 72') remains the same.

16. A braking pressure modulator as claimed in claim 14 or 15,
   **characterized** in that, in one operating position of the stopping or braking system (40, 75, 75', 75"), the adjusting piston (46, 69) is displaceable in opposition to the force of a resetting spring (47, 79, 80), the said stopping or braking system being designed such that the adjusting element is restorable by this spring force in an additional operating position.

17. A braking pressure modulator as claimed in any one of the claims 9 to 16,
   **characterized** in that the working chamber (29, 30, 67') is connected to the braking pressure generator (1, 59) of a brake system via an electromagnetically controllable multidirectional control valve (3, 3', 4, 41, 61), in particular a two-way/two-position directional control valve.

18. A braking pressure modulator as claimed in any one of the claims 9 to 17,
   **characterized** in that the planetary gear (19, 19', 32, 37, 73, 74) is made of plastics entirely or to a major extent.

19. A braking pressure modulator as claimed in any one of the claims 9 to 18,
   **characterized** in that the planetary gear (19, 19', 71, 71', 71") reduces the number of revolutions of the electric drive motor approximately in the ratio of 1 : 3 up to 1 : 10.

**Revendications**

1. Système de freinage à régulation antiblocage et/ou régulation du glissement de traction, comprenant principalement, d'une part, un générateur hydraulique de pression de freinage, actionné par la pédale, et un modulateur de pression de freinage inséré entre ce générateur de pression de freinage et les freins de roues sur le trajet de l'agent de pression et se présentant sous la forme d'un système central à pistons plongeurs (2, 45, 66) qui comprend au moins un piston plongeur (16, 17, 46, 46', 69) agencé de façon à pouvoir se déplacer en translation axiale et permet de faire varier la pression de freinage par modification du volume d'au moins une chambre contenant de l'agent hydraulique et auquel les freins de roues sont reliés par l'intermédiaire de valves de roues (5, 6, 62, 63) ouvertes en position de repos et pouvant être commutées en position de blocage, et, d'autre part, des capteurs, permettant de relever le comportement des roues en rotation, et des circuits électroniques permettant de traiter les signaux des capteurs et de produire des signaux de commande de ppression de freinage, caractérisé en ce que le système à pistons plongeurs (2, 45, 66) est relié au générateur de pression de freinage (1) par l'intermédiaire de valves de coupure (3, 4, 3', 4', 61) ouvertes dans leur position initiale et agencées de façon à pouvoir être commutées vers une position de blocage, en ce que, dans la situation de régulation, les pressions de freinage dans les [reins de roues des différentes roues dont la régulation doit être assurée sont modulées successivement, c'est-à-dire d'une manière décalée dans le temps, suivant le procédé multiplex, au moyen d'un actionnement du système central à pistons plongeurs (2, 45, 48, 66) et des valves de roues (5, 6, 62, 63) et en ce que, pour la régulation de la pression de freinage, les pistons plongeurs (16, 17, 46, 46', 69) sont déplacés axialement en translation au moyen d'un moteur électrique d'entraînement (20, 20', 72, 72') qui est relié à ces pistons plongeurs par l'intermédiaire d'un agencement d'accouplement et de réduction de vitesse (19, 19', 71, 71', 71") et par l'intermédiaire d'un mécanisme à vis sans fin (18, 44, 70, 70', 70") qui n'est pas à autoblocage.

2. Système de freinage suivant la revendication 1, caractérisé en ce que le générateur de pression de freinage (1, 59) et le système à pistons plongeurs (2, 45) sont réalisés, d'une manière connue en soi, sous la forme d'agencements tandem et sont prévus pour le raccordement de deux circuits de freinage (I,II) hydrauliquement séparés.

3. Système de freinage suivant la revendication 1 ou 2, caractérisé en ce que le moteur électrique (20, 20', 72, 72') d'entraînement des pistons plongeurs (46, 46', 69) est agencé de façon que son sens de rotation puisse être inversé, de sorte et en ce qu'au moyen de ce moteur, les pistons peuvent être déplacés en translation dans le sens aussi bien d'une réduction de la pression de freinage que d'une augmentation de la pression de freinage.

4. Système de freinage suivant la revendication 1 ou 2, caractérisé en ce qu'en tant que moteur d'entraînement, il est prévu un moteur électrique (20', 72, 72') dont le sens de rotation est constant et qui est relié aux pistons plongeurs (46, 46', 69) par l'intermédiaire d'un agencement d'accouplement et de réduction de vitesse (19', 71', 71"), au moyen duquel le sens de rotation de l'arbre de sortie (33, 81) de l'entraînement peut être commuté, et par l'intermédiaire d'un mécanisme à vis sans fin (44, 70, 70', 70").

5. Système de freinage suivant la revendication 1 ou 2, caractérisé en ce qu'il est prévu, en tant que moteur électrique d'entraînement, un moteur électrique (72) à sens de rotation constant et combiné à un agencement d'accouplement et de réduction de vitesse (71, 71', 71") dont le sens de rotation de la sortie est inversable.

6. Système de freinage suivant la revendication 5, caractérisé en ce que, dans une autre position de commutation de l'agencement d'accouplement et de réduction de vitesse (71, 71', 71"), le moteur électrique (72, 72') et le mécanisme à vis sans fin (70, 70', 70"), ou le piston (69), sont désaccouplés.

7. Système de freinage suivant la revendication 1, caractérisé en ce que le piston plongeur (69) est maintenu dans une position médiane dans le cylindre (68) au moyen de ressorts de rappel (79, 80).

8. Système de freinage suivant la revendication 7, caractérisé en ce qu'en l'absence de courant, le moteur électrique (72, 72') est désaccouplé vis-à-vis du mécanisme à vis sans fin (70, 70', 70") ou du piston de réglage (69).

9. Modulateur de pression de freinage, notamment pour système de freinage suivant la revendication 1, essentiellement constitué, d'une part, d'un piston de réglage qui est guidé dans un cylindre et au moyen duquel on peut faire varier le volume d'une chambre de travail qui est insérée sur le trajet de l'agent de pression menant à un ou plusieurs freins de roues et, d'autre part, d'un moteur électrique d'entraînement, ainsi que d'un agencement d'accouplement et de réduction de vitesse comportant un mécanisme à vis sans fin qui n'est pas à autoblocage et permet de convertir et transmettre le couple de rotation moteur au piston de réglage, caractérisé en ce que c'est un train d'engrenages de type épicycloïdal, comportant un système d'immobilisation ou de freinage (27, 40, 75, 75', 75") agencé de façon à pouvoir être commandé, qui est prévu en tant qu'agencement d'accouplement et de réduction de vitesse (19, 19' ; 71, 71', 71").

10. Modulateur de pression de freinage suivant la revendication 9, caractérisé en ce que le train d'engrenages de type épicycloïdal (19) comprend un simple train planétaire constitué d'un planétaire (23), de satellites (24, 24') et d'une couronne (25) à denture intérieure.

11. Modulateur de pression de freinage suivant la revendication 10, caractérisé en ce que le système d'immobilisation ou de freinage (27) est essentiellement constitué d'un frein à friction (28, 28'), à commande électromagnétique et déserré en position de repos, au moyen duquel peuvent être freinés des éléments du train d'engrenages de type épicycloïdal (19).

12. Modulateur de pression de freinage suivant la revendication 11, caractérisé en ce que le frein à friction (28, 28') agit sur la couronne (25) du train d'engrenages de type épicycloïdal (19).

13. Modulateur de pression de freinage suivant l'une des revendications 9 à 12, caractérisé en ce qu'après l'actionnement du système d'immobilisation ou de freinage (27, 40, 75, 75', 75"), le couple de rotation du moteur d'entraînement (20, 20', 72, 72') entraîne un déplacement en translation du piston de réglage (16, 64, 69) à l'encontre de la force d'un ressort de rappel (21, 47, 79) et donc un agrandissement du volume de la chambre de travail (29, 30, 67).

14. Modulateur de pression de freinage suivant la revendication 13, caractérisé en ce que le train d'engrenages de type épicycloïdal (19', 71, 71', 71") comprend un double train planétaire (32, 37, 73, 74) et est agencé de telle façon que, par un actionnement du système d'immobilisation ou de freinage (40, 75, 75', 75"), le sens de rotation de l'arbre de sortie (33, 81, 81', 81") puisse être inversé, alors que le sens de rotation du moteur d'entraînement (20', 72, 72') reste identique.

**15.** Modulateur de pression de freinage suivant la revendication 14, caractérisé en ce que les portes-satellites (34, 38) des deux trains planétaires (32, 37, 73, 74) sont accouplés entre eux et, par l'intermédiaire du mécanisme à vis sans fin (44, 70, 70', 70"), avec l'organe de réglage ou piston de réglage (46, 46', 69) et en ce que le moteur d'entraînement (20', 72, 72') est solidaire d'un planétaire (31) faisant partie d'un train planétaire (32, 73) dont la couronne (35) est solidaire du planétaire (36) du second train planétaire (37, 74), tandis que, moyennant un freinage sélectif de la première ou la seconde couronne (35 ou 39), alors que le sens de rotation du moteur d'entraînement (20, 72, 72') reste identique, le sens de rotation de l'arbre de sortie (33, 81, 81', 81") peut dans chaque cas être inversé.

**16.** Modulateur de pression de freinage suivant la revendication 14 ou 15, caractérisé en ce que, dans l'une des positions de commutation du système d'immobilisation ou de freinage (40, 75, 75', 75"), le piston de réglage (46, 69) peut être déplacé en translation à l'encontre de la force d'un ressort de rappel (47, 79, 80), le système d'immobilisation ou de freinage étant agencé de telle façon que, dans une position supplémentaire de commutation, l'organe de réglage puisse être rappelé par la force de ce ressort.

**17.** Modulateur de pression de freinage suivant l'une des revendications 9 à 16, caractérisé en ce que la chambre de travail (29, 30, 67') est reliée au générateur de pression de freinage (1, 59) d'un système de freinage par l'intermédiaire d'une valve à plusieurs voies (3, 3', 4, 4, 61), notamment une valve à deux voies/deux positions, à commande électromagnétique.

**18.** Modulateur de pression de freinage suivant l'une des revendications 9 à 17, caractérisé en ce que le train d'engrenages de type épicycloïdal (19, 19', 32, 37, 73, 74) est constitué totalement, ou en plus grande partie, de matière plastique.

**19.** Modulateur de pression de freinage suivant l'une des revendications 9 à 18, caractérisé en ce que le train d'engrenages de type épicycloïdal (19, 19', 71, 71', 71") réduit la vitesse de rotation du moteur électrique d'entraînement approximativement dans le rapport de 1:3 à 1:10.

Fig. 1

Fig. 2

Fig. 3

Fig. 4